# EUROPEAN PATENT APPLICATION

(11) **EP 3 705 927 A1**
(43) Date of publication of application: **09.09.2020**
(21) Application number: 20153172.0
(22) Date of filing: 22.01.2020
(51) Int. Cl.: G02B 26/10, G02B 26/12, G02B 27/00, G02B 27/01

(54) **OPTICAL SCANNER, DISPLAY SYSTEM, AND MOBILE BODY**

(30) Priority: 08.03.2019 JP 2019042798
(71) Applicant: Ricoh Company, Ltd., Tokyo 143-8555 (JP)
(72) Inventor: MATSUSHIMA, Yusuke, Kanagawa, 222-8530 (JP)
(74) Representative: J A Kemp LLP

(57) **Abstract**

An optical scanner (10) includes a light source (11); a light deflector (13) configured to perform scanning in a first scanning direction and a second scanning direction orthogonal to the first scanning direction with irradiation light emitted from the light source (11); and a screen (15) on which the light deflector (13) performs the scanning with the irradiation light. The optical scanner (10) is configured to turn on the light source (11) based on image information to form an image on the screen (15) in an image area (61) included in a scanning range (63) on the screen (15). The light deflector (13) is configured to perform the scanning in the scanning range (63) with the irradiation light. The image area (61) has an outer periphery having at least one intersecting side (61A, 61B) intersecting with both the first scanning direction and the second scanning direction.

## Description

### BACKGROUND

### Technical Field

The present disclosure relates to an optical scanner, a display system, and a mobile body.

### Description of the Related Art

JP-2018-005007-A discloses an optical scanner having an optical scanning range including a detection area and an image drawing area used for drawing an image. The image drawing area includes an area adjacent to the detection area in a main-scanning direction, and an area adjacent to the detection area in a sub-scanning direction.

It is an object of the present invention to provide the optical scanner, the display system, and the mobile body each being capable of increasing the proportion of the image area in the scanning range.

### SUMMARY

In one aspect of this disclosure, there is provided an improved optical scanner including a light source; a light deflector configured to perform scanning in a first scanning direction and a second scanning direction orthogonal to the first scanning direction with irradiation light emitted from the light source; and a screen on which the light deflector performs the scanning with the irradiation light. The optical scanner is configured to turn on the light source based on image information to form an image on the screen in an image area included in a scanning range on the screen. The light deflector is configured to perform the scanning in the scanning range with the irradiation light. The image area has an outer periphery having at least one intersecting side intersecting with both the first scanning direction and the second scanning direction.

With the disclosure, the optical scanner, the display system, and the mobile body each being capable of increasing the proportion of the image area in the scanning range can be provided.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 illustrates an example of a system configuration of a display system according to an embodiment;
FIG. 2 illustrates an example of a configuration of an on-board device according to the embodiment;
FIG. 3 is a top view of the on-board device according to the embodiment;
FIG. 4 is a side view of the on-board device according to the embodiment;
FIG. 5 is a side cross-sectional view of the on-board device according to the embodiment;
FIG. 6 is a top cross-sectional view of the on-board device according to the embodiment;
FIG. 7 illustrates an example of a configuration of a display device according to the embodiment;
FIG. 8 illustrates attachment and detachment of a screen unit to and from the display device according to the embodiment;
FIG. 9 illustrates an example of a hardware configuration of the display device according to the embodiment;
FIG. 10 illustrates an example of a functional configuration of the display device according to the embodiment;
FIG. 11 illustrates an example of a specific configuration of a light source device according to the embodiment;
FIG. 12 illustrates an example of a specific configuration of a light deflecting device according to the embodiment;
FIG. 13 illustrates an example of a specific configuration of a screen according to the embodiment;
FIGs. 14A and 14B illustrate a difference in effect of a microlens array due to a difference in the magnitude relationship between the diameter of an incident light beam and the diameter of a lens;
FIG. 15 illustrates correspondence between a mirror of the light deflecting device and a scanning range;
FIG. 16 illustrates an example of a scanning line trajectory during two-dimensional scanning;
FIG. 17 is a plan view of the screen unit in view from an upstream side of an optical path;
FIG. 18 illustrates an image area and a detection area in the scanning range according to the embodiment;
FIGs. 19A and 19B illustrate image areas and detection areas according to the embodiment and a comparative example; and
FIG. 20 illustrates an example of a virtual image according to the embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereafter, an embodiment for implementing the disclosure is described with reference to the drawings. Like reference signs are applied to identical or corresponding components throughout the description of the drawings and redundant description thereof is omitted.

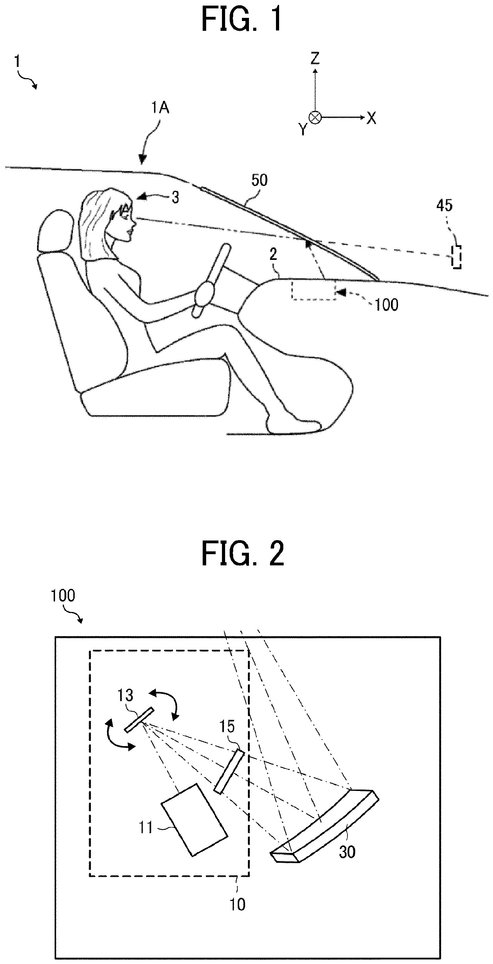

FIG. 1 illustrates an example of a system configuration of a display system 1 according to an embodiment.

The display system 1 causes a transmitting/reflecting member to project projection light projected from an on-board device 100 serving as an example of a projector to enable an observer 3 to visually recognize a display image. The display image is an image that is displayed as a virtual image 45 in a superimposed manner on the sight of the observer 3.

The display system 1 is included in, for example, a mobile body, such as a vehicle, an aircraft, or a ship; or an immobile body, such as a driving simulation system or a home theater system. In the embodiment, a case where the display system 1 is included in an automobile serving as an example of a mobile body 1A is described. However, the way of using the display system 1 is not limited thereby. Hereafter, coordinate axes are defined such that X denotes a travel direction of the mobile body 1A, Y denotes right and left directions, and Z denotes upward and downward directions.

The display system 1 enables the observer 3 (a driver) to visually recognize, via a windshield 50, for example, navigation information required for driving a vehicle (information, such as the speed of the vehicle, route information, the distance to a destination, the name of the current location, the presence and position of an object in front of the vehicle, traffic signs of speed limit etc., and traffic jam information). In this case, the windshield 50 functions as a transmitting/reflecting member that transmits a portion of incident light and reflects at least a portion of the residual portion of the incident light. The distance from the viewpoint position of the observer 3 to the windshield 50 is in a range of from several tens of centimeters to about 1 meter. Instead of the windshield 50, a combiner that is made of a transparent small plastic disk or the like may be used as a transmitting/reflecting member.

The on-board device 100 is, for example, a head-up display device (a HUD device). The on-board device 100 may be disposed at any position in accordance with the interior design of the automobile. For example, the on-board device 100 may be disposed below a dashboard 2 of the automobile or may be embedded in the dashboard 2. In the embodiment, a case where the on-board device 100 is mounted in the dashboard 2 is described.

FIG. 2 illustrates an example of a configuration of the on-board device 100 according to the embodiment. The on-board device 100 includes a display device 10 serving as an example of an optical scanner, a free-form surface mirror 30, and the windshield 50.

The display device 10 includes a light source device 11, a light deflecting device (a light deflector) 13, and a screen 15. The light source device 11 emits a laser beam, which is emitted from a light source, to the outside of the light source device 11. The light source device 11 may emit, for example, a laser beam in which laser beams of three colors including R, G, and B are combined. The laser beam emitted from the light source device 11 is guided to a reflecting surface of the light deflecting device 13. The light source device 11 includes, as a light source, a semiconductor light emitting element such as a laser diode (LD). The light source is not limited to this. The light source may include a semiconductor light emitting element such as a light emitting diode (LED).

The light deflecting device 13 is an example of an image forming device that receives irradiation light emitted from the light source device 11 and emits image light to form an image. The light deflecting device 13 changes the travel direction of the laser beam by using microelectromechanical systems (MEMS) or the like. The light deflecting device 13 includes, for example, a scanner, such as a single very small MEMS mirror that swings about two orthogonal axes or a mirror system including two MEMS mirrors that each swing or rotate about one axis. The laser beam emitted from the light deflecting device 13 scans the screen 15. The light deflecting device 13 may include a polygon mirror or the like instead of the MEMS mirror.

The screen 15 is an example of a screen on which image light emitted from the light deflecting device 13 forms an image. The screen 15 is a diverging member having a function of diverging a laser beam at a predetermined angle of divergence. The screen 15 includes, for example, as a form of an exit pupil expander (EPE), a transmissive optical element having light diffusing effect, such as a microlens array (MLA) or a diffusion plate. The screen 15 may be a reflective optical element having light diffusing effect such as a micromirror array. The laser beam emitted from the light deflecting device 13 scans the screen 15 to form an intermediate image 40, which is a two-dimensional image, on the screen 15.

Projection methods of the display device 10 include a "panel method" of using an imaging device, such as a liquid crystal panel, a digital micromirror device (DMD) panel, or a vacuum fluorescent display (VFD), to form the intermediate image 40; and a "laser scanning method" of using a scanner that performs scanning with the laser beam emitted from the light source device 11 to form the intermediate image 40.

The display device 10 according to the embodiment uses the "laser scanning method". The "laser scanning method" can assign one of emission and non-emission to each pixel and hence can typically form a high-contrast image. Alternatively, the display device 10 may use the "panel method" as the projection method.

The virtual image 45, which is projected on the free-form surface mirror 30 and the windshield 50 with the laser beam (light beam) emitted from the screen 15, is magnified from the intermediate image 40 and displayed. The free-form surface mirror 30 is designed and disposed so as to cancel out the inclination, distortion, positional deviation, and so forth, of an image, which occur due to a curved shape of the windshield 50. The free-form surface mirror 30 may be disposed rotatably around a predetermined rotation shaft. Thus, the free-form surface mirror 30 can adjust the reflection direction of the laser beam (light beam) emitted from the screen 15 to change the display position of the virtual image 45.

The free-form surface mirror 30 is designed by using existing optical design simulation software, to have a certain focal power so that the virtual image 45 can be formed at a desirable position. In the display device 10, the focal power of the free-form surface mirror 30 is set so that the virtual image 45 is displayed, for example, at a position (depth position) in a range of from 1 m to 30 m (preferably 10 m or less) from the viewpoint position of the observer 3. The free-form surface mirror 30 may be a concave mirror or another optical element having focal power. The free-form surface mirror 30 is an example of an image forming optical system.

The windshield 50 is a transmitting/reflecting member that has a function (partial reflection function) of transmitting a portion of a laser beam (light beam) and reflecting at least a portion of the residual portion of the laser beam. The windshield 50 functions as a semi-transmissive mirror that enables the observer 3 to visually recognize the front view and the virtual image 45. The virtual image 45 is, for example, image information that enables the observer 3 to visually recognize vehicle information (speed, travel distance, and so forth), navigation information (route guide, traffic information, and so forth), and warning information (collision warning and so forth). The transmitting/reflecting member may be a front windshield or the like that is provided independently from the windshield 50. The windshield 50 is an example of a reflecting member.

The virtual image 45 may be displayed to be superimposed on the view in front of the windshield 50. The windshield 50 is not flat but curved. Thus, the position at which the virtual image 45 is formed is determined by the curved surfaces of the free-form surface mirror 30 and the windshield 50. The windshield 50 may use a semi-transmissive mirror (combiner) that is an independent transmitting/reflecting member having a partial reflection function.

With such a configuration, a laser beam (light beam) emitted from the screen 15 is projected toward the free-form surface mirror 30, and is reflected by the windshield 50. With the light reflected by the windshield 50, the observer 3 can visually recognize the virtual image 45, which is a magnified image of the intermediate image 40 formed on the screen 15.

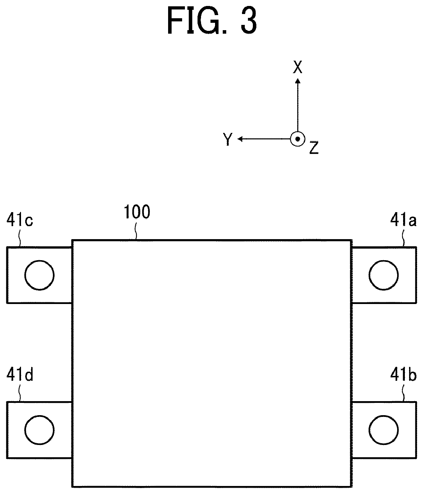

FIG. 3 is a top view of the on-board device 100. As illustrated in FIG. 3, the on-board device 100 includes two attachment portions 41a and 41b at a right surface portion, and two attachment portions 41c and 41d at a left surface portion. The attachment portions 41a to 41d are used to attach the on-board device 100 to the mobile body 1A. The attachment portions 41a to 41d have respective screw holes, and the on-board device 100 is attached to the mobile body 1A via the screw holes.

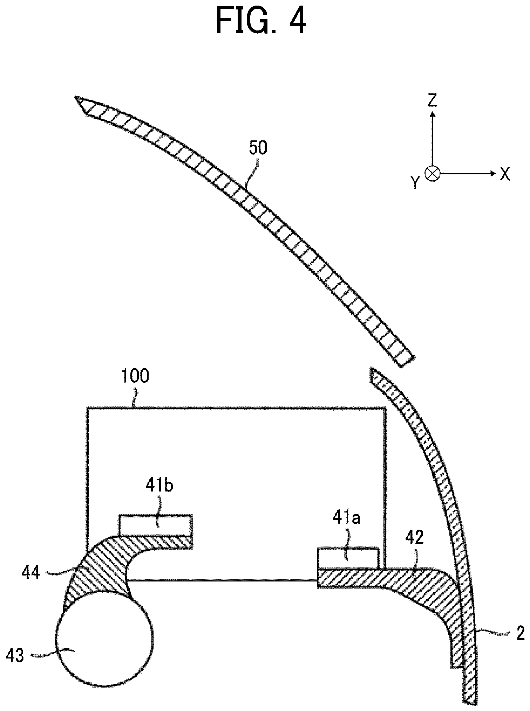

FIG. 4 is a right side view of the on-board device 100 attached to the mobile body 1A. The mobile body 1A includes an attachment bracket 42 welded or fastened to the dashboard 2, and an attachment bracket 44 welded or fastened to a cross car beam 43. The attachment bracket 42 and the attachment bracket 44 are examples of an installation portion. The attachment portions 41a and 41c are fastened to the attachment bracket 42 using screws or the like. The attachment portions 41b and 41d are fastened to the attachment bracket 44 using screws or the like. Thus the on-board device 100 is attached to the mobile body 1A.

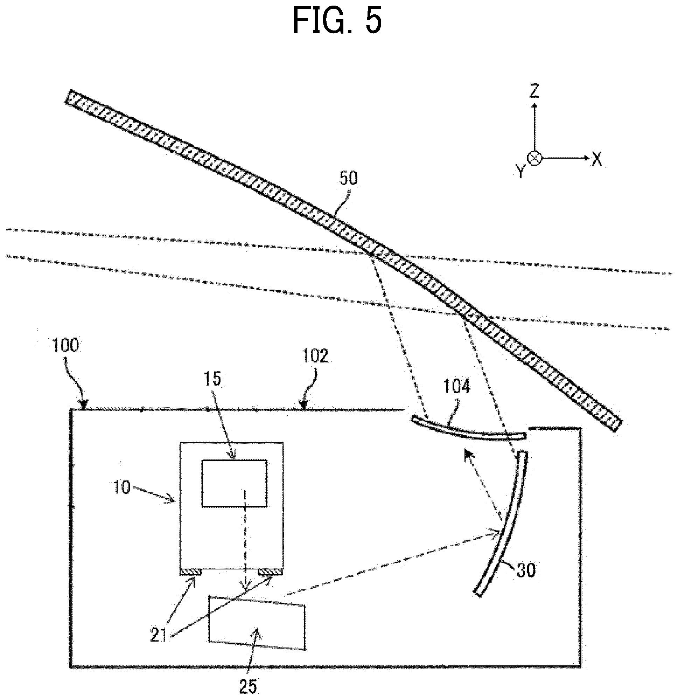

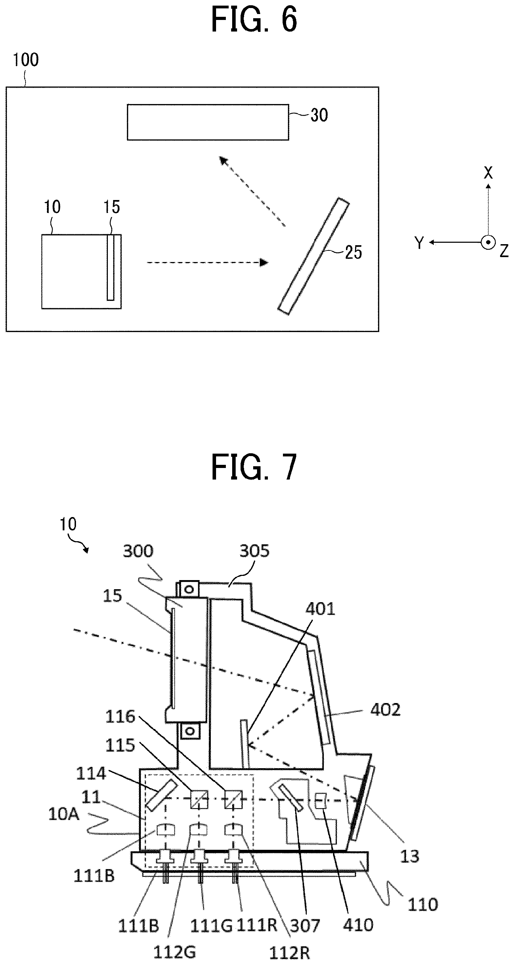

FIG. 5 is a side cross-sectional view of the on-board device 100 in view in the right direction (from the right side in the Y direction). FIG. 6 is a top cross-sectional view of the on-board device 100 in view in the upward direction (the Z direction). FIGs. 5 and 6 illustrate specific arrangement in the on-board device 100.

The on-board device 100 includes, in addition to the display device 10 and the free-form surface mirror 30 illustrated in FIG. 2, a folding mirror 25 that is housed in a housing 102 and that reflects a laser beam projected from the display device 10 toward the freeform surface mirror 30. The housing 102 includes an emission window 104 serving as an example of a transmitting member. The emission window 104 transmits reflected light reflected by the free-form surface mirror 30 and projects the reflected light onto the windshield 50. The display device 10 and the screen 15 are disposed so that the laser beam is projected in the right direction (toward the right side in the Y direction).

FIG. 7 illustrates an example of a configuration of the display device 10. The display device 10 includes, in addition to the light source device 11, the light deflecting device 13, and the screen 15 illustrated in FIG. 2, a filter 307 that optically modulates the laser beam emitted from the light source device 11; a condenser lens 410 that condenses the modulated beam optically modulated by the filter 307 toward the light deflecting device 13; a mirror 401 that reflects the deflected beam deflected by the light deflecting device 13; and a second mirror 402 that reflects the reflected beam reflected by the mirror 401 toward the screen 15.

The light source device 11 includes light source elements 111R, 111G, and 111B (hereafter, referred to as light source element 111 unless the elements are distinguished from one another); coupling (collimate) lenses 112R, 112G, and 112B; and combining elements 114, 115, and 116.

The light source elements 111R, 111G, and 111B for three colors (R, G, B) are, for example, laser diodes (LDs) each having a single emission point or multiple emission points. The light source elements 111R, 111G, and 111B emit laser beams (light beams) having different wavelengths λR, λG, and λB (for example, λR = 640 nm, λG = 530 nm, and λB = 445 nm).

The emitted laser beams (light beams) are respectively coupled by the coupling lenses 112R, 112G, and 112B and become substantially parallel light beams. The coupled laser beams (light beams) are combined by the three combining elements 114, 115, and 116. The combining elements 114, 115, and 116 are plate-shaped or prism-shaped dichroic mirrors, and reflect or transmit laser beams (light beams) in accordance with the wavelength to combine the laser beams into a single light beam. The combined light beam passes through the filter 307 and the condenser lens 410 and is guided to the light deflecting device 13.

The display device 10 is formed by assembling a housing 10A, a mirror unit (a mirror holding member) 305, and a screen unit 300. The housing 10A holds and houses the light source elements 111R, 111G, and 111B; the coupling lenses 112R, 112G, and 112B; the combining elements 114, 115, and 116; the filter 307; the condenser lens 410; and the light deflecting device 13. The mirror unit 305 holds the mirror 401 and the second mirror 402. The screen unit 300 is an example of a holding member that holds the screen 15.

A light source unit 110 is attachable to and detachable from the housing 10A and holds the light source elements 111R, 111G, and 111B.

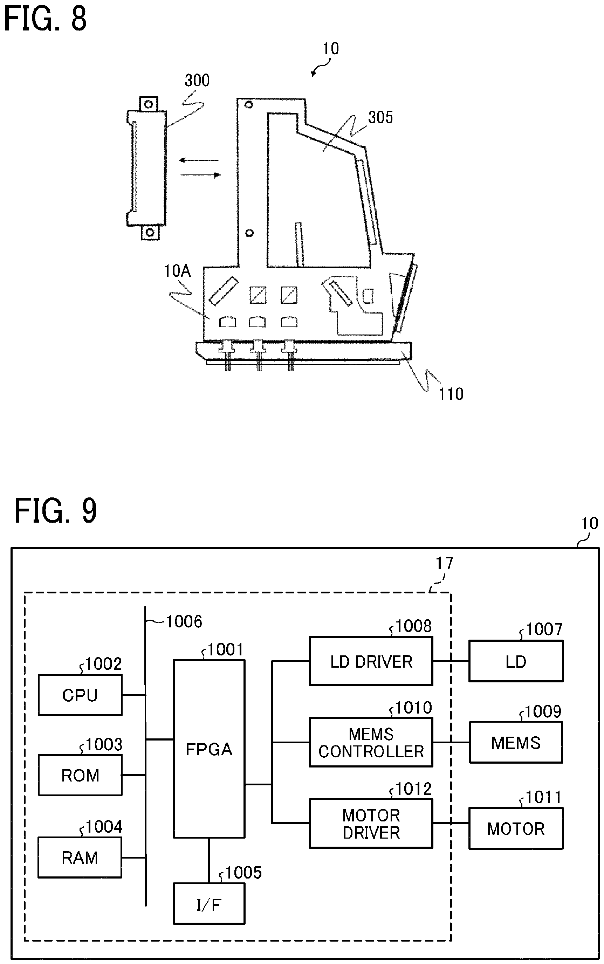

FIG. 8 illustrates attachment and detachment of the screen unit 300 to and from the display device 10. The screen unit 300 is attachable to and detachable from the housing 10A without removing the light source unit 110 and the mirror unit 305 from the housing 10A. The screen unit 300 is attachable to and detachable from the housing 10A without removing the light source device 11, the filter 307, the condenser lens 410, and the light deflecting device 13 from the housing 10A.

The housing 10A is molded by die casting with aluminum, and the mirror unit 305 is molded with resin. The housing 10A has a higher thermal conductivity than the mirror unit 305.

Image light diverging due to the screen 15 reaches the windshield 50 along an optical path illustrated in FIGs. 1 and 2. In actual use, sunlight incident on the windshield 50 may travel reversely along the optical path and may reach the screen 15 and the screen unit 300. In this case, the screen 15 may be deformed and discolored due to heat of sunlight, and image quality may be decreased.

In the embodiment, the screen unit 300 is attached to the housing 10A. Thus, compared with a case where the screen unit 300 is attached to the mirror unit 305 located on the upstream side in the optical path, heat of the screen 15 and the screen unit 300 is more likely dissipated, thereby reducing a decrease in image quality.

The screen unit 300 is attachable to and detachable from the housing 10A without removing the mirror 401 and the second mirror 402 held by the mirror unit 305, the light deflecting device 13, and so forth, from the housing 10A. Thus, the screen unit 300 alone can be easily replaced and maintained. Even if the screen 15 is deformed and discolored, a decrease in image quality can be reduced through replacement and maintenance of the screen 15.

Moreover, the curvature of the windshield 50 varies depending on the type (model) of the mobile body 1A, and hence the size, position, and angle of the screen 15 are required to be finely adjusted in accordance with the image forming optical system (the free-form surface mirror 30). However, since the screen unit 300 is attachable to and detachable from the housing 10A, the housing 10A can be standardized, thereby increasing productivity.

FIG. 9 illustrates an example of a hardware configuration of the display device 10 according to the embodiment. A component may be added to or omitted from the hardware configuration illustrated in FIG. 9 if required.

The display device 10 includes a control device 17 that controls the operation of the display device 10. The control device 17 is a controller that is one of a circuit board, an IC chip, and so forth, mounted in the display device 10. The control device 17 includes a field-programmable gate array (FPGA) 1001, a central processing unit (CPU) 1002, a read only memory (ROM) 1003, a random access memory (RAM) 1004, an interface (I/F) 1005, a bus line 1006, an LD driver 1008, a MEMS controller 1010, and a motor driver 1012.

The FPGA 1001 is an integrated circuit whose setting can be changed by the designer of the display device 10. The LD driver 1008, the MEMS controller 1010, and the motor driver 1012 generate drive signals in accordance with control signals from the FPGA 1001. The CPU 1002 is an integrated circuit that performs processing for control over the display device 10. The ROM 1003 is a storage device that stores programs to control the CPU 1002. The RAM 1004 is a storage device that functions as a work area of the CPU 1002. The I/F 1005 is an interface for communication with an external device. The I/F 1005 is coupled to, for example, a controller area network (CAN) of an automobile.

An LD 1007 is, for example, a semiconductor light emitting element partly constituting the light source device 11. The LD driver 1008 is a circuit that generates a drive signal for driving the LD 1007. A MEMS 1009 is a device that partly constitutes the light deflecting device 13 and that displaces a scanning mirror. The MEMS controller 1010 is a circuit that generates a drive signal for driving the MEMS 1009. A motor 1011 is an electric motor that rotates the rotation shaft of the free-form surface mirror 30. The motor driver 1012 is a circuit that generates a drive signal for driving the motor 1011.

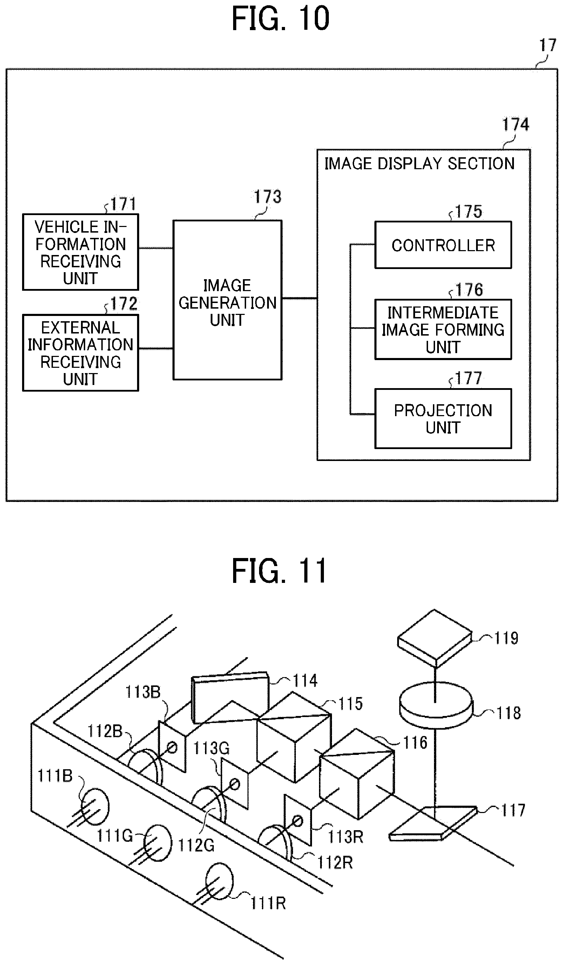

FIG. 10 illustrates an example of a functional configuration of the display device 10 according to the embodiment. The functions implemented by the display device 10 include a vehicle information receiving unit 171, an external information receiving unit 172, an image generation unit 173, and an image display section 174.

The vehicle information receiving unit 171 is a function of receiving automobile information (information such as the speed and the travel distance) from the CAN and so forth. The vehicle information receiving unit 171 is implemented by processing performed by the I/F 1005 and the CPU 1002 illustrated in FIG. 9, a program stored in the ROM 1003, and so forth.

The external information receiving unit 172 is a function of receiving information on the outside of the automobile (position information from the GPS, one of route information and traffic information from a navigation system, and so forth) from an external network. The external information receiving unit 172 is implemented by processing performed by the I/F 1005 and the CPU 1002 illustrated in FIG. 9, a program stored in the ROM 1003, and so forth.

The image generation unit 173 is a function of generating image information for displaying the intermediate image 40 and the virtual image 45 based on the information that is input by the vehicle information receiving unit 171 and the external information receiving unit 172. The image generation unit 173 is implemented by processing performed by the CPU 1002 illustrated in FIG. 9, a program stored in the ROM 1003, and so forth.

The image display section 174 is a function of forming the intermediate image 40 on the screen 15 and projecting a laser beam (light beam) constituting the intermediate image 40 toward the windshield 50 to display the virtual image 45 based on the image information generated by the image generation unit 173. The image display section 174 is implemented by processing performed by the CPU 1002, the FPGA 1001, the LD driver 1008, the MEMS controller 1010, and the motor driver 1012 illustrated in FIG. 9, a program stored in the ROM 1003, and so forth.

The image display section 174 includes a controller 175, an intermediate image forming unit 176, and a projection unit 177. The controller 175 generates control signals for controlling the operations of the light source device 11 and the light deflecting device 13 to form the intermediate image 40. Moreover, the controller 175 generates a control signal for controlling the operation of the free-form surface mirror 30 to display the virtual image 45 at a predetermined position.

The intermediate image forming unit 176 forms the intermediate image 40 on the screen 15 based on the control signal generated by the controller 175. The projection unit 177 projects a laser beam constituting the intermediate image 40 onto a transmitting/reflecting member (the windshield 50 or the like) to form the virtual image 45, which is to be visually recognized by the observer 3.

FIG. 11 illustrates an example of a specific configuration of the light source device 11 according to the embodiment. The light source device 11 includes, in addition to the configuration illustrated in FIG. 7, apertures 113R, 113G, and 113B; an optical-path branch element 117; a condenser lens 118, and a light receiving element 119. The apertures 113R, 113G, and 113B are disposed between the coupling lenses 112R, 112G, and 112B and the combining elements 114, 115, and 116. The apertures 113R, 113G, and 113B respectively shape laser beams (light beams) coupled by the coupling lenses 112R, 112G, and 112B. The apertures 113R, 113G, and 113B have shapes (for example, circular shapes, elliptical shapes, rectangular shapes, or square shapes) appropriate for predetermined conditions, such as the angles of divergence of the laser beams (light beams).

The optical-path branch element 117 transmits a portion of the laser beam (light beam) emitted from the combining element 116, guides the laser beam to the filter 307 illustrated in FIG. 7, reflects another portion of the laser beam, and guides the laser beam to the condenser lens 118. The light receiving element 119 is an example of a light detector that detects irradiation light emitted from the combining element 116 serving as an example of a light source. The light receiving element 119 detects the intensity of the laser beam condensed by the condenser lens 118. The controller 175 illustrated in FIG. 10 controls the intensity of the laser beam emitted from the light source device 11 based on intensity information on the laser beam detected by the light receiving element 119.

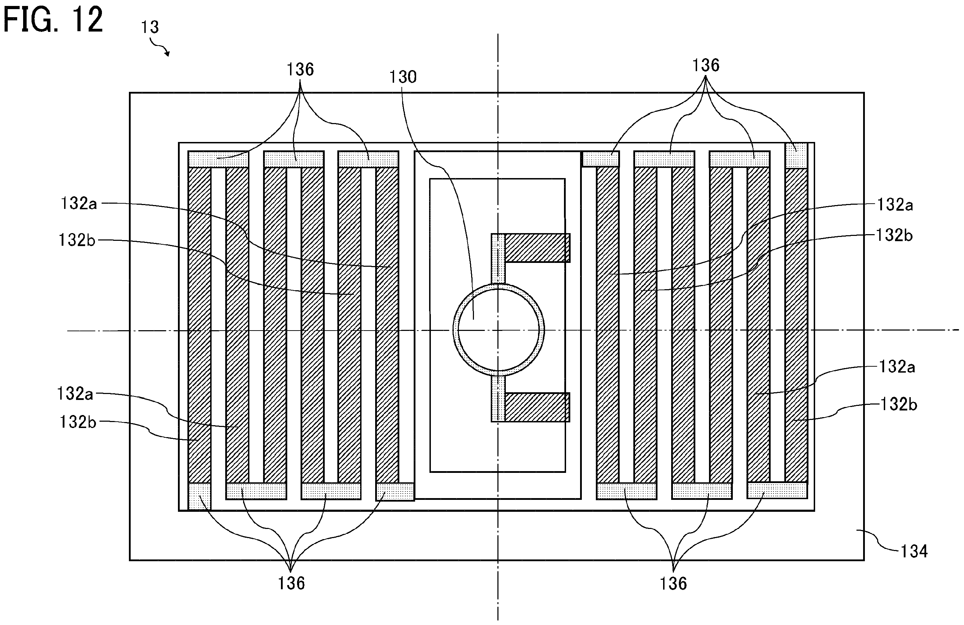

FIG. 12 illustrates an example of a specific configuration of the light deflecting device 13 according to the embodiment. The light deflecting device 13 is a MEMS mirror that is manufactured through a semiconductor process, and includes a mirror 130, a meandering beam portion 132 (132a, 132b), a frame member 134, and a piezoelectric member 136. The light deflecting device 13 is an example of a light deflector that performs scanning in a main-scanning direction which is an example of a first scanning direction, and a sub-scanning direction which is an example of a second scanning direction intersecting with (orthogonal to) the first scanning direction.

The mirror 130 has a reflecting surface that reflects the laser beam emitted from the light source device 11 toward the screen 15. The light deflecting device 13 defines a pair of meandering beam portions 132 with the mirror 130 interposed therebetween. The meandering beam portions 132 have a plurality of folding portions. The folding portions include first beam portions 132a and second beam portions 132b that are alternately arranged. The meandering beam portions 132 are supported by the frame member 134. The piezoelectric member 136 is disposed to couple the first beam portion 132a and the second beam portion 132b that are adjacent to each other. The piezoelectric member 136 applies different voltages to the first beam portion 132a and the second beam portion 132b to respectively warp the beam portions 132a and 132b.

Thus, the first and second adjacent beam portions 132a and 132b are twisted in different directions. As twists are accumulated, the mirror 130 rotates in the vertical direction around an axis in the right and left directions. With such a configuration, the light deflecting device 13 can perform optical scanning in the vertical direction with a low voltage. Optical scanning in the horizontal direction around an axis in the upward and downward directions is performed by resonance using a torsion bar or the like that is coupled to the mirror 130.

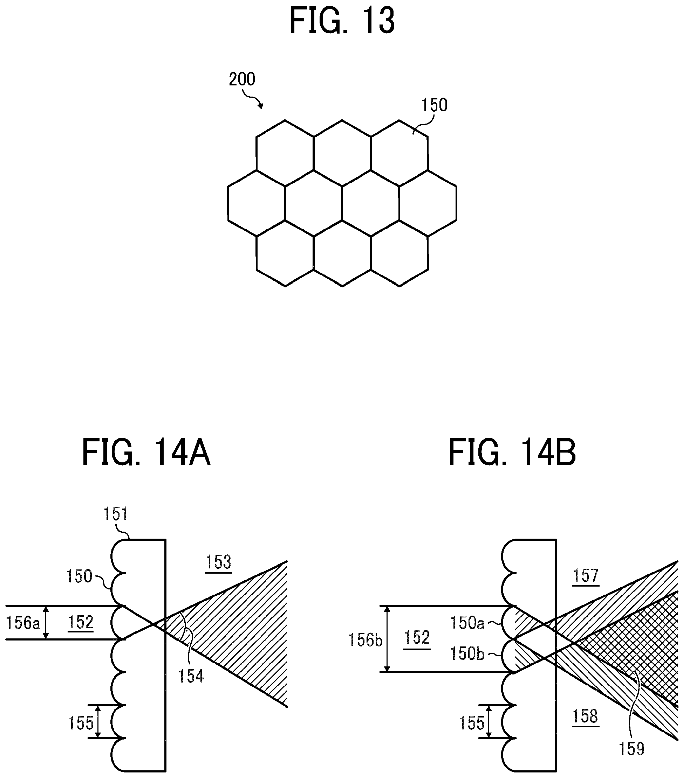

FIG. 13 illustrates an example of a specific configuration of the screen 15 according to the embodiment. A laser beam emitted from the LD 1007 partly constituting the light source device 11 forms an image on the screen 15. The screen 15 is a diverging member that diverges a laser beam at a predetermined angle of divergence. The screen 15 illustrated in FIG. 13 has a microlens array structure in which a plurality of microlenses 150 (convex portions each serving as an example of a curved portion), each having a hexagonal shape, are arranged with no gap therebetween. This microlens structure serves as an example in which a plurality of curved portions are arranged so as to diverge light. The microlenses 150 each have a lens diameter (the distance between two opposite sides) of about 200 µm. The plurality of microlenses 150 of the screen 15 each have a hexagonal shape to arrange the microlenses 150 with high density. The details of a microlens array 200 and the microlenses 150 according to the embodiment are described later.

FIGs. 14A and 14B illustrate a difference in effect of the microlens array due to a difference in the magnitude relationship between the diameter of an incident light beam and the diameter of a lens. In FIG. 14A, the screen 15 includes an optical plate 151 in which the microlenses 150 are arranged in an array. When incident light 152 scans the optical plate 151, the incident light 152 is diverged by the microlenses 150 and becomes divergent beams 153. Due to the structure of the microlenses 150, the screen 15 can diverge the incident light 152 at a desirable angle of divergence 154. The microlenses 150 are designed to each have a lens diameter 155 that is larger than the diameter 156a of the incident light 152. Thus, the screen 15 does not cause interference between the lenses and reduces occurrence of interference noise.

FIG. 14B illustrates an optical path of divergent beams when the diameter 156b of the incident light 152 is twice the lens diameter 155 of each of the microlenses 150. The incident light 152 is incident on two microlenses 150a and 150b, which respectively generate divergent beams 157 and 158. At this time, the two divergent beams are present in an area 159, and hence interference between the divergent beams may occur. When the interference light enters the eyes of the observer, the observer visually recognizes the interference light as interference noise.

With consideration of the above, in order to reduce interference noise, the lens diameter 155 of each of the microlenses 150 is designed to be larger than the diameter 156 of incident light. In FIGs. 14A and 14B, the lenses are convex lenses. However, concave lenses may provide advantageous effects similar to those of the convex lenses.

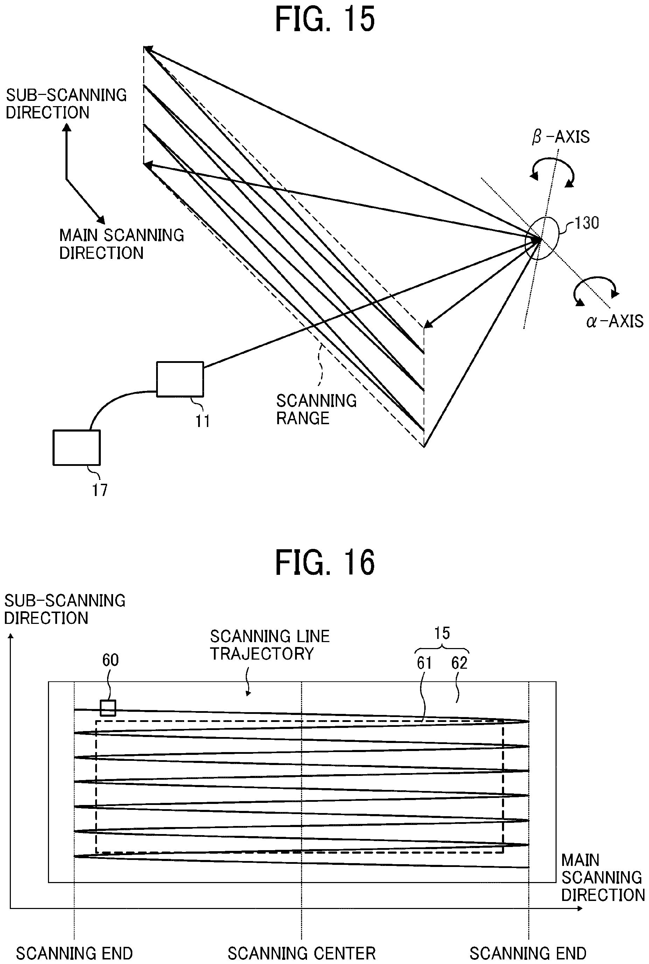

FIG. 15 illustrates correspondence between a mirror 130 of the light deflecting device 13 and the scanning range. The FPGA 1001 controls the emission intensity, the on/off timing, and the light waveform of each of the light source elements of the light source device 11. Each of the light source elements of the light source device 11 is driven by the LD driver 1008 and emits a laser beam. As illustrated in FIG. 15, a laser beam that is formed by combining the optical paths of laser beams emitted from the respective light source elements is two-dimensionally deflected by the mirror 130 of the light deflecting device 13 around the α axis and around the β axis. Then, the laser beam is emitted as scanning light onto the screen 15 via the mirror 130. That is, the screen 15 is two-dimensionally scanned through main scanning and sub-scanning by the light deflecting device 13.

The scanning range is the entire range that can be scanned by the light deflecting device 13. The scanning light scans the scanning range of the screen 15 in one way in the sub-scanning direction at a low frequency of about several tens of hertz, while performing vibration scanning (two-way scanning) in the main-scanning direction at a high frequency in a range of from about 20000 Hz to about 40000 Hz. That is, the light deflecting device 13 performs raster scan on the screen 15. In this case, since the emission of each of the light source elements is controlled in accordance with the scanning position (the position of scanning light), the display device 10 can perform drawing per pixel or displaying of a virtual image.

The time required for drawing one screen, that is, the scanning time for one frame (one period of two-dimensional scanning) is several tens of milliseconds, because the sub-scanning period is several tens of hertz as described above. For example, if the main scanning frequency is 20000 Hz and the sub-scanning frequency is 50 Hz, the scanning time for one frame is 20 msec.

FIG. 16 illustrates an example of a scanning line trajectory during two-dimensional scanning. As illustrated in FIG. 16, the screen 15 includes an image area 61 (effective scanning area) in which the intermediate image 40 is formed (irradiated with light modulated in accordance with image data), and a frame area 62 that surrounds the image area 61.

The scanning range is a range of the screen 15 including the image area 61 and a portion of the frame area 62 (a portion near the outer edge of the image area 61). In FIG. 16, the trajectory of a scanning line in the scanning range is indicated by a zigzag line. In FIG. 16, for convenience of illustration, the number of scanning lines is smaller than the actual number.

As described above, the screen 15 includes a transmissive optical element that has light diverging effect, such as the microlens array 200. The image area 61 may not be a rectangular surface or a flat surface, and may be a polygonal surface or a curved surface. Depending on the device layout, the screen 15 may be, for example, a reflective optical element that has light diffusing effect, such as a micromirror array. In the following description, the embodiment is described on the assumption that the screen 15 includes the microlens array 200.

The screen 15 includes a synchronous detection system 60 that is in a peripheral area of the image area 61 (a portion of the frame area 62) of the scanning range and that includes a light receiving element. Referring to FIG. 16, the synchronous detection system 60 is disposed at a corner of the image area 61 on the -X side and on the +Y side. The synchronous detection system 60 detects an operation of the light deflecting device 13 and outputs a synchronous signal for determining a scanning start timing and a scanning end timing to the FPGA 1001.

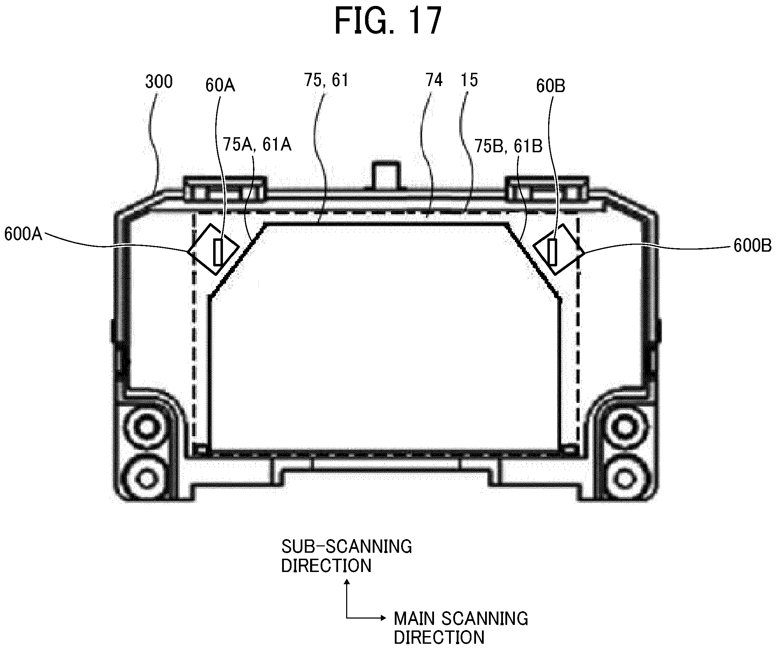

FIG. 17 is a plan view of the screen unit 300 in view from the upstream side of the optical path.

The screen unit 300 includes a shield 74 located upstream of the screen 15 in the optical path. The shield 74 shields a portion of scanning light with which the light deflecting device 13 performs scanning. The shield 74 has an opening window 75 that transmits the scanning light. The area having the opening window 75 corresponds to the image area 61.

The inner periphery of the opening window 75, or in other words the inner periphery of the shield 74 has intersecting side portions 75A and 75B intersecting with both the main-scanning direction and the sub-scanning direction.

The intersecting side portion 75A is an end portion in the main-scanning direction and an end portion in the sub-scanning direction of the opening window 75, and is disposed at an upper left position in FIG. 17. The intersecting side portion 75B is an end portion in the main-scanning direction and an end portion in the sub-scanning direction of the opening window 75, and is disposed at an upper right position in FIG. 17. The intersecting side portions 75A and 75B both are arranged so that the opening window 75 expands downward.

As described above, since the area having the opening window 75 corresponds to the image area 61, the outer periphery of the image area 61 has intersecting sides 61A and 61B intersecting with both the main-scanning direction and the sub-scanning direction to correspond to the intersecting side portions 75A and 75B.

The intersecting side 61A is an end portion in the main-scanning direction and an end portion in the sub-scanning direction of the image area 61, and is disposed at an upper left position in FIG. 17. The intersecting side 61B is an end portion in the main-scanning direction and an end portion in the sub-scanning direction of the outer periphery of the image area 61, and is disposed at an upper right position in FIG. 17.

In the embodiment, since the upward and downward directions of the image area 61 agree with the upward and downward directions of the virtual image 45, the intersecting sides 61A and 61B both are arranged in an upper portion of the image area in the virtual image 45 and are arranged so that the image area expands downward.

The shield 74 is provided with optical sensors 60A and 60B as an example of a synchronous detection system. The optical sensors 60A and 60B face the upstream side of the optical path. Synchronous detection areas 600A and 600B serving as an example of a detection area indicate areas to be irradiated with scanning light for the optical sensors 60A and 60B.

In addition to the shield 74 in the optical path, a shield that shields a portion of the scanning light with which the light deflecting device 13 performs scanning may be provided immediately downstream of at least one of the mirror 401 and the light deflecting device 13 of the optical path.

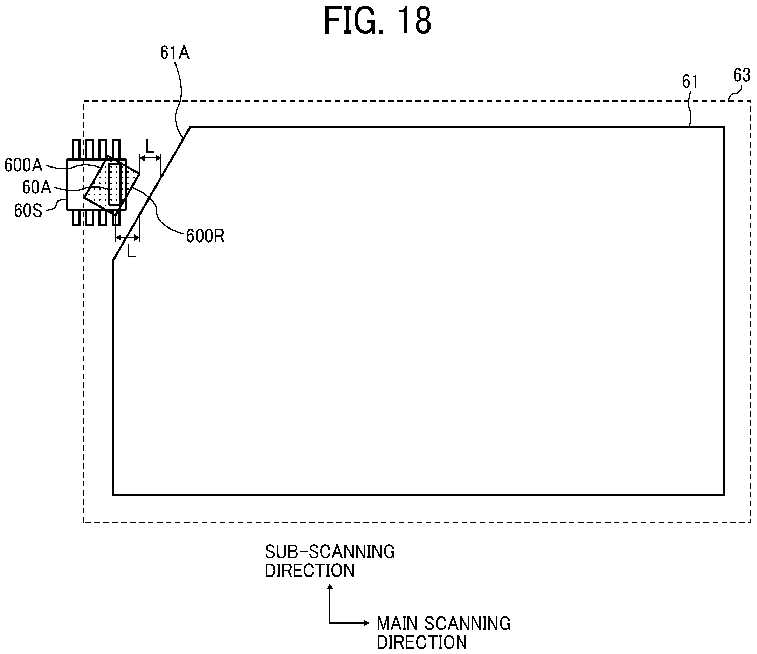

FIG. 18 illustrates the image area and the detection area in the scanning range according to the embodiment.

A scanning range 63 in which the light deflecting device 13 performs two-dimensional scanning in the main-scanning direction and the sub-scanning direction is provided at the position at which the screen 15 and the shield 74 are disposed in the optical path. The scanning range 63 includes the image area 61 where an image is formed and the synchronous detection area 600A. The synchronous detection area 600B illustrated in FIG. 17 is not illustrated in FIG. 18; however, has a configuration similar to the synchronous detection area 600A.

The image area 61 may be shifted from or rotated about the center of the scanning range 63. The image area 61 may not be rectangular, and may be trapezoidal, elliptical, or polygonal as far as the image area 61 provides proper display.

The synchronous detection area 600A is disposed to overlap the image area 61 in the main-scanning direction and the sub-scanning direction. Thus the proportion of the image area 61 in the scanning range 63 can be increased.

The outer periphery of the synchronous detection area 600A has a facing and intersecting side 600R facing the intersecting side 61A of the outer periphery of the image area 61, and intersecting with both the main-scanning direction and the sub-scanning direction. The facing and intersecting side 600R is parallel to the intersecting side 61A with a distance L interposed in the main-scanning direction.

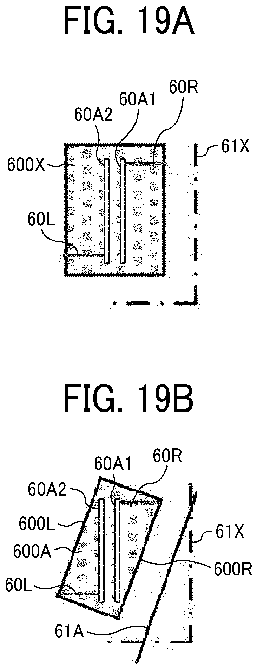

FIGs. 19A and 19B illustrate image areas and detection areas according to the embodiment and a comparative example.

FIG. 19A illustrates the details of the image area and the detection area according to the comparative example. The outer periphery of the image area 61 has a step-shaped side 61X. The optical sensor 60A includes photosensors 60A1 and 60A2 extending in the sub-scanning direction. A synchronous detection area 600X is defined to have a margin 60R on the right side of the photosensor 60A1 and a margin 60L on the left side of the photosensor 60A2, and has sides parallel to the sub-scanning direction to have a constant distance from the side 61X in the main-scanning direction.

FIG. 19B illustrates the details of the image area and the detection area according to the embodiment. The outer periphery of the image area 61 has the intersecting side 61A. The optical sensor 60A includes photosensors 60A1 and 60A2 extending in the sub-scanning direction. The synchronous detection area 600A is defined to have a margin 60R on the right side of the photosensor 60A1 and a margin 60L on the left side of the photosensor 60A2, and has a facing and intersecting side 600R parallel to the intersecting side 61A and an intersecting side 600L parallel to the facing and intersecting side 600R to have a constant distance from the intersecting side 61A in the main-scanning direction.

Since the image area 61 has the intersecting side 61A illustrated in FIG. 19B, the image area 61 can be larger compared with the case where the image area 61 has the side 61X illustrated in FIG. 19A.

Since the facing and intersecting side 600R and the intersecting side 600L illustrated in FIG. 19B are provided, the synchronous detection area 600A illustrated in FIG. 19B can be smaller than the synchronous detection area 600X illustrated in FIG. 19A. Thus, an influence on an image formed in the image area 61 by, for example, light reflected by the synchronous detection area 600A can be reduced.

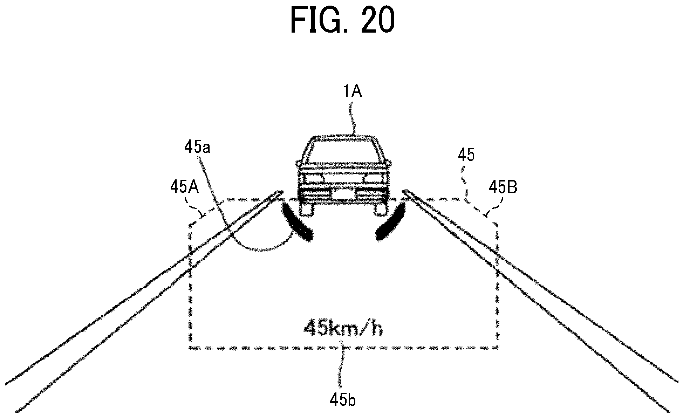

FIG. 20 illustrates an example of a virtual image 45 according to the embodiment. The virtual image 45 includes superimposition information 45a that is superimposed on a leading vehicle (the mobile body 1A) and character information 45b. The image area in the virtual image 45 includes intersecting sides 45A and 45B to correspond to the intersecting sides 61A and 61B of the image area 61. The intersecting sides 45A and 45B are arranged in an upper portion of the image area in the virtual image 45 and are arranged so that the image area expands downward.

As illustrated in FIG. 20, a far object is recognized as being small in an upper section and a close object is recognized as being large in a lower section of the sight of the observer 3 via the windshield 50, like lane lines in FIG. 20. Although the image area in the virtual image 45 is limited by the intersecting sides 45A and 45B, the limited image area does not give the observer 3 unnatural feeling.

The display device, the display system, and the mobile body according to the embodiment of the disclosure have been described above. However, the disclosure is not limited to the embodiment described above, and the embodiment may be modified within a scope conceivable by a person having ordinary skill in the art.

The display device according to the embodiment of the disclosure is not limited to a HUD device, and may be, for example, a head mount display device, a prompter device, a projector device, or the like. For example, when the display device according to the embodiment of the disclosure is applied to a projector device, the projector device may be configured in a similar way to the display device 10. That is, the display device 10 may project image light via the free-form surface mirror 30 onto a projection screen, a wall surface, or the like. The display device 10 may project image light via the screen 15 onto a projection screen, a wall surface, or the like without using the free-form surface mirror 30.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. An optical scanner (10) comprising:
a light source (11);
a light deflector (13) configured to perform scanning in a first scanning direction and a second scanning direction orthogonal to the first scanning direction with irradiation light emitted from the light source (11); and
a screen (15) on which the light deflector (13) performs the scanning with the irradiation light,
wherein the optical scanner (10) being configured to turn on the light source (11) based on image information to form an image on the screen (15) in an image area (61) included in a scanning range (63) on the screen (15), the light deflector (13) being configured to perform the scanning in the scanning range (63) with the irradiation light, and
wherein the image area (61) has an outer periphery having at least one intersecting side (61A, 61B) intersecting with both the first scanning direction and the second scanning direction.

2. The optical scanner (10) according to Claim 1,
wherein the intersecting side (61A, 61B) is disposed at an end portion of the image area (61) in the first scanning direction and an end portion of the image area (61) in the second scanning direction.

3. The optical scanner (10) according to Claim 1 or 2, the optical scanner (10) further comprising:
a shield (74) located upstream of the screen (15) in an optical path and configured to shield a portion of scanning light with which the light deflector (13) performs the scanning,
wherein the shield (74) has an inner periphery having at least one intersecting side portion (75A, 75B) intersecting with both the first scanning direction and the second scanning direction.

4. The optical scanner (10) according to any one of Claims 1 to 3,
wherein the light source (11) is turned on when the light deflector (13) performs the scanning in at least one detection area (600A, 600B) outside the image area (61),
wherein the optical scanner (10) further comprises at least one light detector (60A, 60B) configured to detect the irradiation light when the light deflector (13) performs the scanning in the detection area (600A, 600B), and
wherein the detection area (600A, 600B) overlaps the image area (61) in the first scanning direction and the second scanning direction.

5. The optical scanner (10) according to Claim 4,
wherein the light detector (60A, 60B) is disposed downstream of the light deflector (13) in the optical path.

6. The optical scanner (10) according to Claim 4 or 5,
wherein the detection area (600A, 600B) has an outer periphery having a facing and intersecting side (600R) facing the outer periphery of the image area (61) and intersecting with both the first scanning direction and the second scanning direction.

7. The optical scanner (10) according to Claim 6,
wherein the facing and intersecting side (600R) is parallel to the intersecting side (61A).

8. A display system (1) comprising:
the optical scanner (10) according to any one of Claims 1 to 7;
an image forming optical system (30) configured to reflect projection light projected from the screen (15); and
a reflecting member (50) configured to reflect reflected light reflected from the image forming optical system (30),
wherein the image forming optical system (30) reflects the projection light toward the reflecting member (50) to form a virtual image (45).

9. A mobile body (1A) comprising:
the display system (1) according to Claim 8,
wherein the reflecting member (50) is a windshield.

10. The mobile body (1A) according to Claim 9,
wherein the intersecting side (61A, 61B) is arranged in an upper portion of the image area (61) in the virtual image (45) and arranged so that the image area (61) expands downward.
